# EUROPEAN PATENT SPECIFICATION

(11) **EP 4 307 637 B1**
(45) Date of publication and mention of the grant of the patent: **11.02.2026**
(21) Application number: 21930055.5
(22) Date of filing: 09.03.2021
(51) Int. Cl.: H04L 9/40, H04L 45/00

(54) **ESTIMATION APPARATUS, ESTIMATION METHOD, AND PROGRAM**
SCHÄTZVORRICHTUNG, SCHÄTZVERFAHREN UND PROGRAMM
APPAREIL D'ESTIMATION, PROCÉDÉ D'ESTIMATION ET PROGRAMME

(43) Date of publication of application: 17.01.2024
(73) Proprietor: NTT, Inc., Tokyo 100-8116 (JP)
(72) Inventor: YAMANAKA Yuki, Musashino-shi, Tokyo 180-8585 (JP)
(74) Representative: Hoffmann Eitle
(86) International application number: PCT/JP2021/009228
(87) International publication number: WO 2022/190198

(56) References cited:
- JP-A- 2007 074 339
- JP-A- 2019 004 419
- JP-A- 2019 033 312
- JP-A- 2019 110 513
- US-A1- 2019 044 913
- US-A1- 2019 190 938
- JIAXIN LIU ET AL: "Deep Anomaly Detection in Packet Payload", ARXIV.ORG, CORNELL UNIVERSITY LIBRARY, 201 OLIN LIBRARY CORNELL UNIVERSITY ITHACA, NY 14853, 5 December 2019 (2019-12-05), XP081545884

## Description

### Technical Field

The present invention relates to an estimation apparatus, an estimation method, and a program.

### Background Art

In a communication network of an operational technology (OT) in an industrial system, a building system, or the like, an abnormality detection system or an intrusion detection system (operational technology intrusion detection system (OT-IDS)) has attracted attention. Packets transmitted and received in such a communication network need to be detected without overlooking even a small amount of unauthorized rewriting such as one byte. For example, an unexpected operation may cause a serious accident, such as a case where a set value of temperature is changed by one digit due to unauthorized rewriting.

There are tools for monitoring a network (refer to Non Patent Literature 1 and Non Patent Literature 2). These tools can monitor and analyze data transmitted and received via the network.

### Citation List

### Non Patent Literature

Non Patent Literature 1: WIRESHARK, [online], [Searched on February 25, 2021], Internet <URL: https://www.wireshark.org/> Non Patent Literature 2: zeek, [online], [Searched on February 25, 2021], Internet <URL: https://zeek.org/>

### Patent Literature

US 2019/0044913 A1 describes processing packets for detecting suspicious communication. Packets are converted into vectors and manipulated packets can be detected by comparing the vector of the packet with normal packets. The packet data is represented by a sequence of byte values, which are each a scalar value. Semantic information and time information may be added to the scalar value of each byte. Then, the data of the bytes is converted into vector values, and the packet data is arranged as an array of vector values. This vectorization is considered to enable extraction of information that cannot be obtained by simply analyzing the packet data itself.Summary of Invention

### Technical Problem

However, none of the Non Patent Literatures can specify an abnormal byte in an abnormal packet.

The present invention has been made in view of the above circumstances, and an object of the present invention is to provide a technology capable of estimating an abnormal byte in an abnormal packet.

### Solution to Problem

The object of the invention is solved by the subject matter of the independent claims, advantageous embodiments of the invention are disclosed in the dependent claims. An estimation apparatus according to an example includes: a conversion unit that converts abnormal packet data into abnormal vector data using a model that converts packet data into vector data in which each byte of the packet data is associated with each vector representing a characteristic of a value of each byte; an extraction unit that extracts normal vector data having a relatively high similarity to the abnormal vector data from among a plurality of pieces of normal vector data obtained by converting a plurality of pieces of normal packet data using the model; and an estimation unit that estimates an abnormal byte in the abnormal packet data from a similarity between a vector corresponding to each byte of the abnormal vector data and a vector corresponding to each byte of the extracted normal vector data.

An estimation method according to an exampleincludes the steps of: converting, by a computer, abnormal packet data into abnormal vector data using a model that converts packet data into vector data in which each byte of the packet data is associated with each vector representing a characteristic of a value of each byte; extracting, by the computer, normal vector data having a relatively high similarity to the abnormal vector data from among a plurality of pieces of normal vector data obtained by converting a plurality of pieces of normal packet data using the model; and estimating, by the computer, an abnormal byte in the abnormal packet data from a similarity between a vector corresponding to each byte of the abnormal vector data and a vector corresponding to each byte of the extracted normal vector data.

An aspect of the present invention is a program for causing a computer to function as the above estimation apparatus.

### Advantageous Effects of Invention

According to the present invention, it is possible to provide a technology capable of estimating an abnormal byte in an abnormal packet.

### Brief Description of Drawings

[Fig.1] Fig. 1 is a diagram for explaining functional blocks of an estimation apparatus according to an embodiment of the present invention.
[Fig.2] Fig. 2 is a diagram for explaining an example of data converted by a model.
[Fig.3] Fig. 3 is a flowchart illustrating an example of processing of an estimation method.
[Fig.4] Fig. 4 is a diagram for explaining each device of an evaluation system of an estimation apparatus.
[Fig.5] Fig. 5 is a diagram for explaining an example of a packet obtained in the evaluation system.
[Fig.6] Fig. 6 is a diagram for explaining an example of a similarity matrix obtained in the evaluation system.

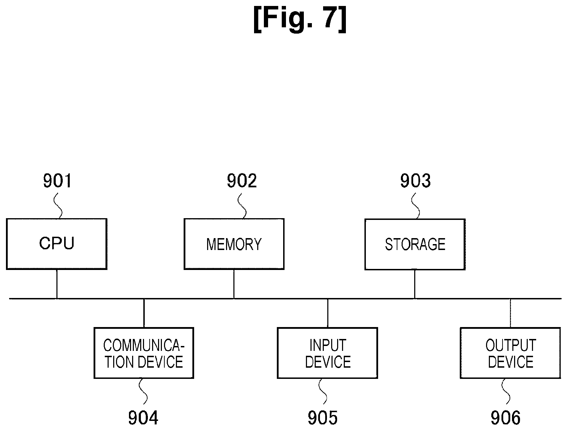

[Fig.7] Fig. 7 is a diagram for explaining a hardware configuration of a computer to be used in the estimation apparatus.

### Description of Embodiments

Hereinafter, an embodiment of the present invention will be described with reference to the drawings. In the drawings, the same parts are denoted by the same reference signs, and description thereof is omitted.

### (Estimation Apparatus)

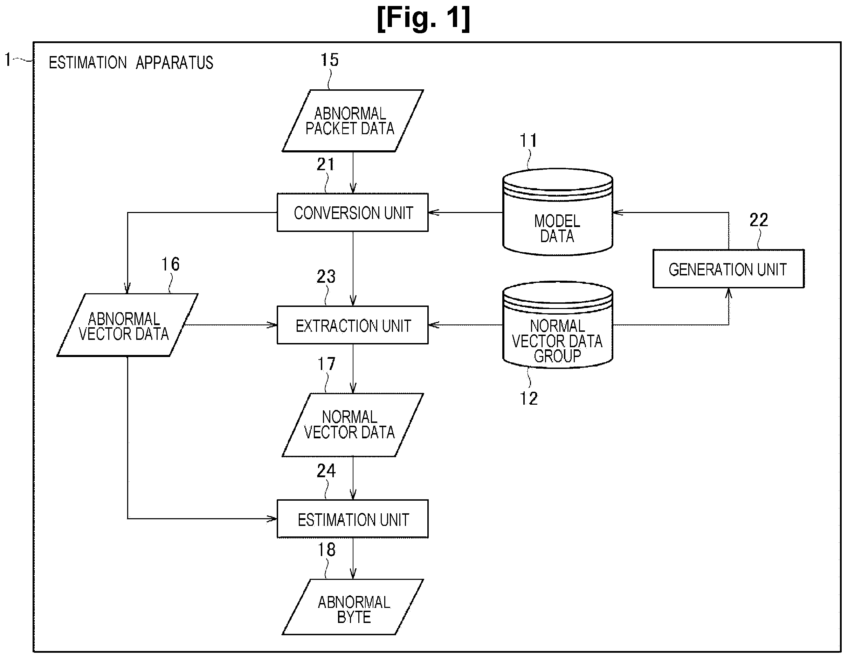

An estimation apparatus 1 according to an embodiment of the present invention will be described with reference to Fig. 1. When an abnormal packet is inputted, the estimation apparatus 1 estimates and outputs an abnormal byte in the abnormal packet. The estimation apparatus 1 compares an abnormal packet determined to be abnormal by another system with a normal packet determined to be normal by the other system, and estimates an abnormal byte in the inputted abnormal packet. For example, a normal packet and an abnormal packet are each collected in a communication network of one operation technology. Another system may determine whether a packet is normal or abnormal by an arbitrary method, and the determination method is not limited in the embodiment of the present invention.

The estimation apparatus 1 includes each data of model data 11, a normal vector data group 12, abnormal packet data 15, abnormal vector data 16, normal vector data 17, and an abnormal byte 18, and each function of a conversion unit 21, a generation unit 22, an extraction unit 23, and an estimation unit 24. Each data is stored in a memory 902 or a storage 903. Each function is implemented by a CPU 901.

The model data 11 specifies a model that converts packet data into vector data. The vector data associates each byte of packet data with each vector representing a characteristic of a value of each byte. The model data 11 is generated by learning the value of each byte of a plurality of pieces of normal packet data of the normal vector data group 12 by the generation unit 22 (which will be described later). The characteristic of the value of each byte is calculated by comparison with the value of each byte of a plurality of pieces of normal packet data.

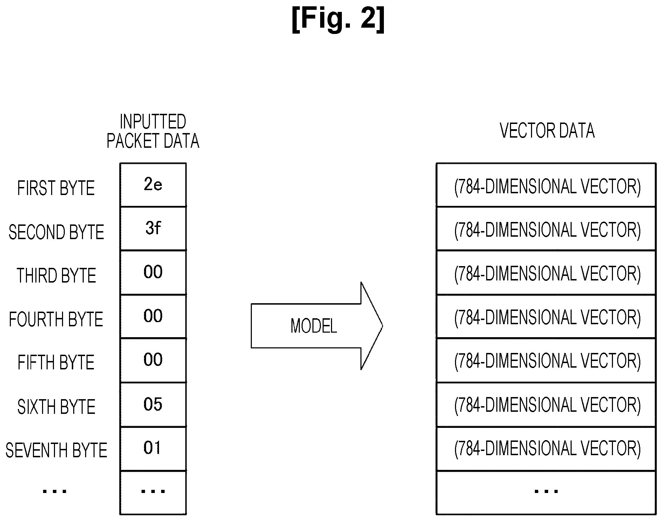

The model data 11 specifies a model that converts each byte of the inputted packet data into a vector having an appropriate fixed length in consideration of a positional relationship of each byte and the like. Here, the vector having an appropriate fixed length means a vector with which the abnormal byte 18 can be estimated by comparing the abnormal vector data 16 and the normal vector data 17 in the estimation unit 24 (which will be described later). For example, as illustrated in Fig. 2, it is assumed that there is packet data having a fixed length such as a value of a first byte "2e", a value of a second byte "3f", a value of a third byte "00"...,. Each byte of the packet data is converted into a 784-dimensional vector by the model. In the example illustrated in Fig. 2, the model converts each byte of the packet data into a 784-dimensional vector representing a characteristic of a value of each byte.

The model data 11 is generated by bidirectional encoder representations from transformers (BERT), for example. BERT is a natural language processing model. In the embodiment of the present invention, each byte of packet data is regarded as one word. The packet data is converted into vector data by a model generated using BERT.

The normal vector data group 12 includes a plurality of pieces of normal vector data. The normal vector data is data obtained by converting normal packet data using a model specified by the model data 11. The normal packet data is determined to be normal in another system. The normal vector data group 12 is referred to when the generation unit 22 generates the model data 11 or when the extraction unit 23 extracts the normal vector data 17 similar to the abnormal vector data 16. Both the generation unit 22 and the extraction unit 23 may refer to a plurality of pieces of normal vector data included in the normal vector data group 12. Alternatively, a plurality of pieces of normal vector data included in the normal vector data group 12 may be divided into a plurality of groups, one group may be referred to by the generation unit 22, and another group may be referred to by the extraction unit 23.

The abnormal packet data 15 is data of a packet specified as an abnormal packet in another system. The estimation apparatus 1 estimates an abnormal byte 18 for one piece of abnormal packet data 15.

The abnormal vector data 16 is data obtained by converting the abnormal packet data 15 by the model specified by the model data 11. The abnormal vector data 16 associates an identifier of a position of each byte of the abnormal packet data 15 with each vector representing a characteristic of a value of each byte.

The normal vector data 17 is data having a relatively high similarity to the abnormal vector data 16 among a plurality of pieces of normal vector data included in the normal vector data group 12. The normal vector data 17 is normal vector data having the highest similarity to the abnormal vector data 16 among a plurality of pieces of normal vector data included in the normal vector data group 12. Alternatively, the normal vector data 17 is one of a predetermined number of pieces of normal vector data having high similarity.

The abnormal byte 18 is data that specifies a byte, which is estimated to be abnormal, among bytes of the abnormal packet data 15. For example, the abnormal byte 18 is specified in the order in which the position of each byte of the abnormal packet data 15 is counted from the head.

The conversion unit 21 converts the abnormal packet data 15 into abnormal vector data 16 using the model specified by the model data 11. For example, as illustrated in Fig. 2, the conversion unit 21 converts the value of each byte of the abnormal packet data 15 into a 784-dimensional vector. The conversion unit 21 associates the position of each byte of the abnormal packet data 15 with the 784-dimensional vector obtained by conversion from the byte, and outputs the abnormal vector data 16.

The generation unit 22 learns the value of each byte of a plurality of pieces of normal packet data of the normal vector data group 12 and generates a model specified by the model data 11. The model converts the packet data into vector data that associates each byte of the packet data with each vector representing a characteristic of the value of each byte. The generation unit 22 generates a model according to BERT, for example. The generation unit 22 may perform preliminary learning about the characteristic of the value of each byte in the normal packet data by solving an auxiliary task such as a masked language model (MLM) or a next sentence prediction (NSP). MLM predicts the values of missing bytes in packets in which a plurality of bytes are missing. The NSP determines whether two pieces of packet data are consecutive packets or not. The generation unit 22 specifies validity of data in a packet and validity of consecutive packets by using these auxiliary tasks, and the generation unit 22 generates a model that specifies normal vector data. The auxiliary tasks described herein are merely an example, and the generation unit 22 may learn by solving other auxiliary tasks.

The extraction unit 23 extracts normal vector data having a relatively high similarity to the abnormal vector data 16 from among a plurality of pieces of normal vector data of the normal vector data group 12. The extraction unit 23 regards the extracted normal vector data as the normal vector data 17.

Having a relatively high similarity means that the similarity between the abnormal vector data 16 and certain normal vector data is higher than the similarity between the abnormal vector data 16 and the other normal vector data. The extraction unit 23 may extract normal vector data having the highest similarity to the abnormal vector data 16. Alternatively, the extraction unit 23 may extract one piece of normal vector data from among a plurality of pieces of normal vector data of a predetermined number or a predetermined ratio having a high similarity to the abnormal vector data 16.

The extraction unit 23 calculates a similarity between the abnormal vector data 16 and each normal vector data of the normal vector data group 12. The extraction unit 23 may calculate a similarity to a part of normal vector data in the normal vector data group 12. For example, a part of the normal vector data is a plurality of pieces of normal vector data obtained by extracting a plurality of pieces of representative packet data from among a plurality of pieces of normal packet data by using MMD-Critic (maximum mean discrepancy (MMD)) and converting each piece of the extracted representative packet data by using a model. Alternatively, a part of the normal vector data is a plurality of pieces of normal vector data obtained by extracting normal packet data having the same packet length as the abnormal packet data 15 from among a plurality of pieces of normal packet data and converting each piece of the extracted normal packet data by using a model.

In a case where the model is BERT, the extraction unit 23 may use BERT Score as the similarity. Alternatively, the extraction unit 23 may calculate a similarity between the vector of the abnormal vector data 16 and the vector of the normal vector data for each byte of the abnormal vector data 16, and calculate a similarity between the abnormal vector data 16 and the normal vector data from the similarity calculated for each byte. As the similarity between vectors of each byte, a Cosine similarity may be used. The similarity between the abnormal vector data 16 and the normal vector data 17 is, for example, an average of similarities calculated for each byte. At this time, in a case where the number of vectors of the abnormal vector data 16 is different from the number of vectors of the normal vector data 17, the similarity may be calculated according to the smaller number of vectors. Note that the number of vectors of each vector data is the number of bytes of the packet data before conversion.

The estimation unit 24 estimates an abnormal byte 18 in the abnormal packet data 15 from the similarity between the vector corresponding to each byte of the abnormal vector data 16 and the vector corresponding to each byte of the extracted normal vector data 17.

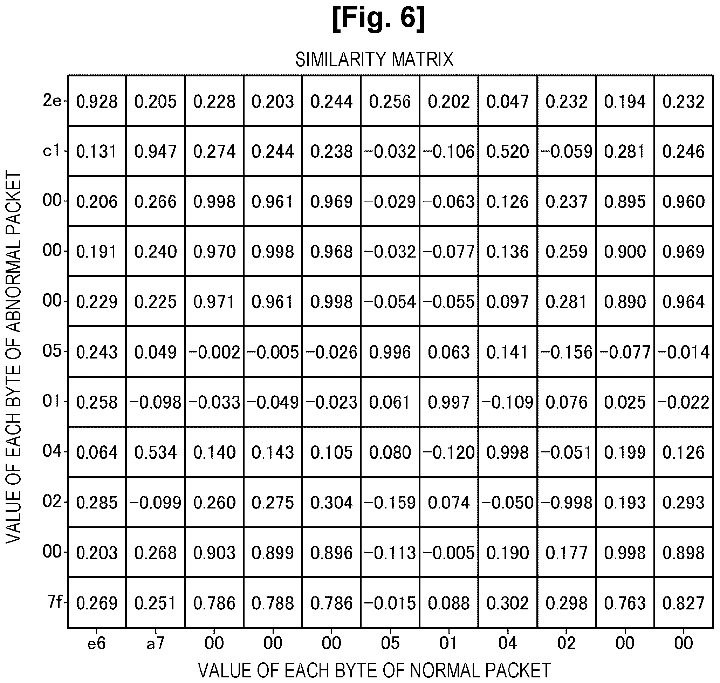

The extraction unit 23 calculates a Cosine similarity matrix illustrated in Fig. 6 between each vector included in the abnormal vector data 16 and each vector included in the normal vector data 17. The (n, m) component of the Cosine similarity matrix is the Cosine similarity between the vector corresponding to the n-th byte of the abnormal vector data 16 and the vector corresponding to the m-th byte of the normal vector data 17.

For example, in a case where the highest similarity among the similarities between the vector corresponding to the predetermined byte of the abnormal packet data 15 and the vector corresponding to each byte of the extracted normal vector data 17 is lower than a predetermined threshold, the estimation unit 24 estimates the predetermined byte as the abnormal byte 18. Whether the i-th byte of the abnormal packet data 15 is an abnormal byte or not is estimated as follows. The m is a packet length of the normal packet data. The estimation unit 24 focuses on the respective components of the (i, 1) component, the (i, 2) component, the (i, 3) component,..., and the (i, m) component of the Cosine similarity matrix calculated as above. The estimation unit 24 estimates that the i-th byte is the abnormal byte 18 when the component having the highest Cosine similarity among the official texts is equal to or less than a certain threshold.

In a case where the number of bytes of the abnormal packet data 15 is the same as the number of bytes of the packet data before conversion of the normal vector data 17, vectors corresponding to the same byte of the abnormal packet data 15 and the normal vector data 17 may be compared with each other. For example, in a case where the similarity between the vector data corresponding to the i-th byte of the abnormal packet data 15 and the vector data corresponding to the i-th byte of the normal packet data is lower than a predetermined threshold when estimating whether the i-th byte of the abnormal packet data 15 is an abnormal byte or not, the estimation unit 24 estimates the i-th byte of the abnormal packet data 15 as an abnormal byte.

The threshold for the estimation unit 24 to determine whether the byte is an abnormal byte or not may be, for example, a fixed value such as 0.5. Alternatively, the threshold may be specified by predetermined calculation. For example, a plurality of pairs of two normal packets similar to each other may be extracted, and the threshold may be specified from the lowest similarity among the similarities of the respective vectors of two normal packets corresponding to a predetermined byte.

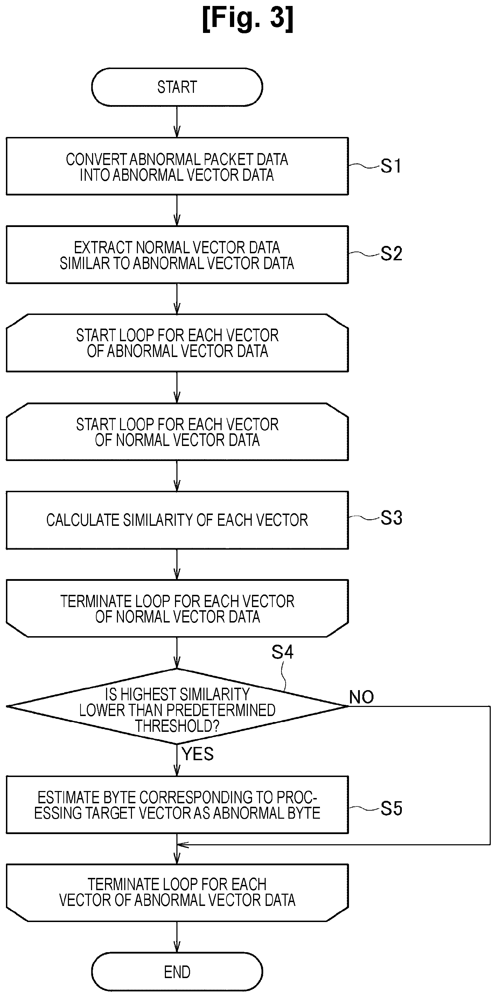

An estimation method performed by the estimation apparatus 1 according to the embodiment of the present invention will be described with reference to Fig. 3.

In step S1, the estimation apparatus 1 converts the abnormal packet data 15 into abnormal vector data 16. In step S2, the estimation apparatus 1 extracts normal vector data 17 similar to the abnormal vector data 16 obtained by conversion in step S1 from the normal vector data group 12.

The processing of steps S3 to S5 is repeated for each vector of the abnormal vector data 16, in other words, each vector corresponding to each byte of the abnormal packet data 15.

The processing of step S3 is repeated for each vector of the normal vector data 17 extracted in step S2. In step S3, the estimation apparatus 1 calculates the similarity between the processing target vector of the abnormal vector data 16 and the processing target vector of the normal vector data 17. When the similarity is calculated, the processing proceeds to step S4.

In step S4, the estimation apparatus 1 determines whether the highest similarity among the plurality of similarities calculated for the processing target vector of the abnormal vector data 16 and each vector of the normal vector data 17 is lower than a predetermined threshold or not. When the highest similarity is higher than the predetermined threshold, the estimation apparatus 1 estimates that the processing target vector of the abnormal vector data 16 does not correspond to an abnormal byte. The estimation apparatus 1 processes step S3 for the next processing target vector.

When the highest similarity is lower than the predetermined threshold, the estimation apparatus 1 estimates that the processing target vector of the abnormal vector data 16 corresponds to an abnormal byte. In step S6, the estimation apparatus 1 outputs a byte corresponding to the processing target vector of the abnormal vector data 16 as an abnormal byte 18.

When the processing of steps S3 to S5 ends for each vector of the abnormal vector data 16, the estimation apparatus 1 ends the processing.

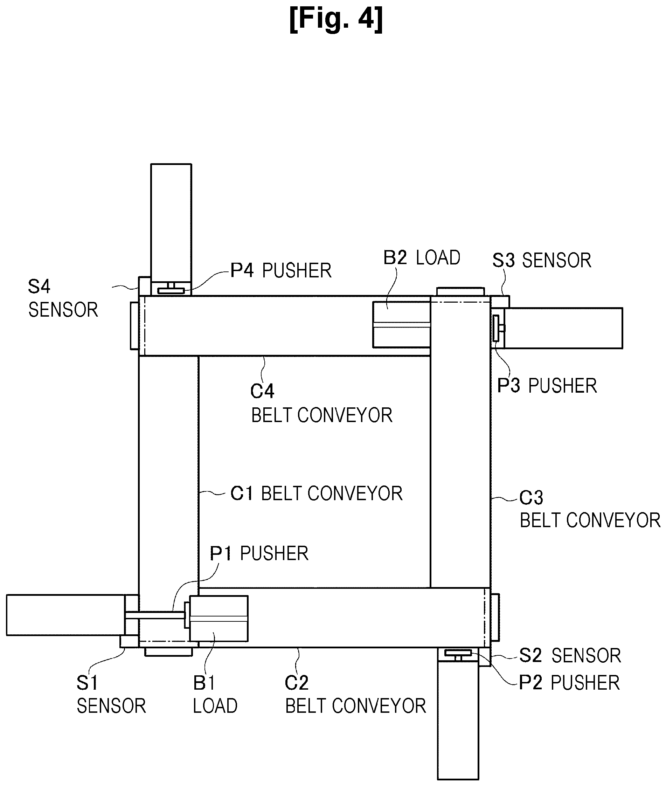

Evaluation of the estimation apparatus 1 will be described with reference to Figs. 4 to 6. In the evaluation of the estimation apparatus 1, a virtual evaluation system is used.

As illustrated in Fig. 4, the evaluation system controls movement of loads B1 and B2 by arranging four belt conveyors C1 to C4 in a rectangular shape and using a programmable logic controller (PLC) (not shown). Each device illustrated in Fig. 4 transmits a packet for notifying a PLC of a state or receives a packet for designating a drive content from the PLC, according to a Modbus/TCP protocol or the like. In the normal state, the PLC drives pushers P1 to P4 according to the detection situation of sensors S1 to S4, and thus the belt conveyors C1 to C4 carry the loads B1 and B2 counterclockwise at a constant speed. The speed of the belt conveyors is sequentially monitored by the PLC. When the speed of the belt conveyors exceeds the constant speed, the PLC issues an emergency stop command to each device illustrated in Fig. 4, and each device stops.

For example, the load B1 moves on the belt conveyor C1. At this time, the belt conveyor C1 transmits a packet for giving a notification of the moving speed of the belt to the PLC. When the load B1 comes into contact with a laser beam emitted from the sensor S1, the sensor S1 transmits a packet for giving a notification that the load has arrived to the PLC. Note that the laser beam is shown by an alternate long and short dash line in the example illustrated in Fig. 4. Upon receiving the packet, the PLC transmits a packet for turning on the pusher P1. The pusher P1 extends from the box according to the received packet and carries the load B1 to the belt conveyor C2. When the load no longer comes into contact with a laser beam emitted from the sensor S1, the sensor S1 transmits a packet for giving a notification that there is no load to the PLC. Upon receiving the packet, the PLC transmits a packet for turning off the pusher P1. The pusher P1 is shortened and accommodated in the box according to the received packet. By repeating such processing by each device, the load B1 moves counterclockwise on the belt conveyors illustrated in Fig. 4. Similarly, the load B2 moves counterclockwise on the belt conveyors illustrated in Fig. 4.

The PLC collects normal packet data when each device illustrated in Fig. 4 operates normally. The generation unit 22 learns a plurality of pieces of normal packet data collected by the PLC to generate the model data 11. In the evaluation system, the extraction unit 23 refers to a plurality of pieces of normal vector data obtained from conversion from each normal packet data collected by the PLC. Moreover, BERT Score F1 is used as a measure of similarity.

An abnormal state is generated by manually moving the belt conveyors quickly such that the speed becomes an abnormal value. A packet for giving a notification of the speed of the belt conveyors in this abnormal state is inputted to the PLC as abnormal packet data 15.

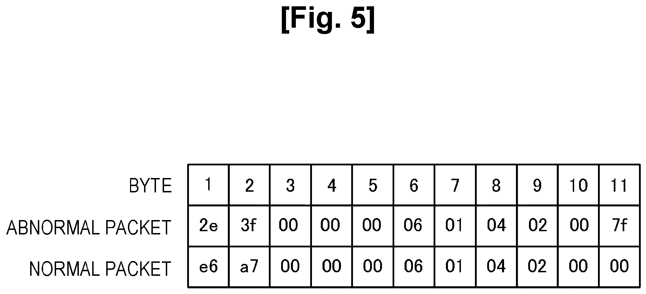

The extraction unit 23 extracts normal vector data most similar to the abnormal vector data 16 obtained by conversion from the abnormal packet data 15. Fig. 5 illustrates comparison between the abnormal packet data 15 and the normal packet data before conversion of the normal vector data extracted by the extraction unit 23.

In Fig. 5, the communication ID is set in the first byte and the second byte. The communication ID is an identifier that specifies a packet transmitted and received in the system illustrated in Fig. 4. In the 11th byte, the speed of the belt conveyor is set. In the example illustrated in Fig. 5, the values of the abnormal packet and the normal packet are different in the first byte, the second byte, and the 11th byte, but the values in the other bytes are the same. It can be seen that the extraction unit 23 has extracted normal vector data most similar to the abnormal vector data 16.

Fig. 6 is a similarity matrix between vectors of respective bytes of an abnormal packet and a normal packet. It can be seen from Fig. 6 that high similarities are arranged diagonally. However, the similarities of comparison between the first bytes, the second bytes, and the 11th bytes on the diagonal have low values. It is considered that the first byte, the second byte, or the 11th byte of the abnormal packet may be an abnormal byte.

On the other hand, as a result of comparing two pieces of normal vector data obtained by conversion from two normal packets similar to each other, the lowest similarity among the similarities obtained by comparing vectors corresponding to the same byte was 0.91. This 0.91 is used as a threshold for detecting an abnormal byte.

Since the similarity of each of the first byte and the second byte is larger than 0.91, the estimation unit 24 estimates that the first byte and the second byte are not abnormal bytes. In the first byte and the second byte, since different communication IDs are set for each packet, a similarity higher than the threshold is calculated even if different values are set for the normal packet and the abnormal packet.

On the other hand, since the similarity at the 11th byte is 0.827 and is smaller than 0.91, the estimation unit 24 estimates the 11th byte as an abnormal byte. In the 11th byte, the speed of the belt conveyor is set. This estimation performed by the estimation unit 24 also coincides with a situation in which an abnormal state has been generated by manually moving the belt conveyors quickly.

The estimation apparatus 1 according to the embodiment of the present invention can estimate the abnormal byte 18 in the abnormal packet data 15. As a result, the estimation apparatus 1 can precisely analyze the content of the payload. For example, by introducing the estimation apparatus 1 into a communication network or the like of an operational technology in an industrial system, a building system, or the like, it is possible to detect packets without overlooking even a small amount of unauthorized rewriting such as one byte.

The estimation apparatus 1 according to the present embodiment described above is, for example, a general-purpose computer system including the central processing unit (CPU, processor) 901, the memory 902, the storage 903 (hard disk drive (HDD) or solid state drive (SSD)), a communication device 904, an input device 905, and an output device 906. In this computer system, each function of the estimation apparatus 1 is implemented by the CPU 901 executing a program loaded on the memory 902.

Note that the estimation apparatus 1 may be implemented by one computer or may be implemented by a plurality of computers. Moreover, the estimation apparatus 1 may be a virtual machine that is implemented by a computer.

The program for the estimation apparatus 1 can be stored in a computer-readable recording medium such as an HDD, an SSD, a universal serial bus (USB) memory, a compact disc (CD), or a digital versatile disc (DVD), or can be distributed via a network.

Note that the present invention is not limited to the above embodiment, and various modifications can be made within the scope of the gist of the present invention.

### Reference Signs List

- 1: Estimation apparatus
- 11: Model data
- 12: Normal vector data group
- 15: Abnormal packet data
- 16: Abnormal vector data
- 17: Normal vector data
- 18: Abnormal byte
- 21: Conversion unit
- 22: Generation unit
- 23: Extraction unit
- 24: Estimation unit
- 901: CPU
- 902: Memory
- 903: Storage
- 904: Communication device
- 905: Input device
- 906: Output device

## Claims

1. An estimation apparatus (1) comprising:
a conversion unit (21) that converts abnormal packet data into abnormal vector data using a model that converts packet data into vector data in which each byte of the packet data is converted into a vector and wherein each byte is associated with each vector, each vector representing a characteristic of a value of each byte of the packet data;
an extraction unit (23) that extracts normal vector data having a relatively high similarity to the abnormal vector data from among a plurality of pieces of normal vector data obtained by converting a plurality of pieces of normal packet data using the model; and
an estimation unit (24) that estimates an abnormal byte in the abnormal packet data from a similarity between a vector corresponding to each byte of the abnormal vector data and a vector corresponding to each byte of the extracted normal vector data, wherein the abnormal byte is estimated based on a similarity between vector data corresponding to an i-th byte of the abnormal packet data and vector data corresponding to the i-th byte of the normal packet data that is lower than a predetermined threshold.

2. The estimation apparatus (1) according to claim 1,
wherein the model is generated by learning a value of each byte of a plurality of pieces of normal packet data.

3. The estimation apparatus according to claim 1,
wherein the extraction unit (23) calculates a similarity between a vector of the abnormal vector data and a vector of the normal vector data for each byte of the abnormal vector data to calculate a similarity between the abnormal vector data and the normal vector data from the similarity calculated for each byte.

4. The estimation apparatus (1) according to claim 1,
wherein in a case where a highest similarity among similarities between a vector corresponding to a predetermined byte of the abnormal packet data and a vector corresponding to each byte of the extracted normal vector data is lower than a predetermined threshold, the estimation unit estimates the predetermined byte as the abnormal byte.

5. An estimation method comprising the steps of:
converting, by a computer, abnormal packet data into abnormal vector data using a model that converts packet data into vector data in which each byte of the packet data is is converted into a vector and wherein each byte associated with each vector, each vector representing a characteristic of a value of each byte of the packet data;
extracting, by the computer, normal vector data having a relatively high similarity to the abnormal vector data from among a plurality of pieces of normal vector data obtained by converting a plurality of pieces of normal packet data using the model; and
estimating, by the computer, an abnormal byte in the abnormal packet data from a similarity between a vector corresponding to each byte of the abnormal vector data and a vector corresponding to each byte of the extracted normal vector data, wherein the abnormal byte is estimated based on a similarity between vector data corresponding to an i-th byte of the abnormal packet data and vector data corresponding to the i-th byte of the normal packet data that is lower than a predetermined threshold.

6. A program for causing a computer to function as the estimation apparatus according to any one of claims 1 to 4.

7. The estimation apparatus according to claim 1,
wherein the abnormal packet data comprises the abnormal byte and at least one normal byte.

## Patentansprüche

1. Abschätzungseinrichtung (1), umfassend:
eine Umwandlungseinheit (21), die anormale Paketdaten in anormale Vektordaten unter Verwendung eines Modells umwandelt, das Paketdaten in Vektordaten umwandelt, in denen jedes Byte der Paketdaten in einen Vektor umgewandelt wird, und wobei jedes Byte jedem Vektor zugeordnet wird, wobei jeder Vektor ein Merkmal eines Werts von jedem Byte der Paketdaten darstellt;
eine Extraktionseinheit (23), die normale Vektordaten extrahiert, die eine relativ hohe Ähnlichkeit mit den anormalen Vektordaten aufweisen, aus einer Vielzahl von Teilen von normalen Vektordaten, die durch Umwandeln einer Vielzahl von Teilen von normalen Paketdaten unter Verwendung des Modells erhalten wurden; und
eine Abschätzungseinheit (24), die ein anormales Byte in den anormalen Paketdaten aus einer Ähnlichkeit zwischen einem Vektor, der jedem Byte der anormalen Vektordaten entspricht, und einem Vektor, der jedem Byte der extrahierten normalen Vektordaten entspricht, abschätzt, wobei das anormale Byte basierend auf einer Ähnlichkeit zwischen Vektordaten, die einem i-ten Byte der anormalen Paketdaten entsprechen, und Vektordaten, die dem i-ten Byte der normalen Paketdaten entsprechen, die niedriger als ein vorbestimmter Schwellenwert ist, abgeschätzt wird.

2. Abschätzungseinrichtung (1) nach Anspruch 1,
wobei das Modell durch Lernen eines Werts von jedem Byte einer Vielzahl von Teilen von normalen Paketdaten erzeugt wird.

3. Abschätzungseinrichtung nach Anspruch 1,
wobei die Extraktionseinheit (23) eine Ähnlichkeit zwischen einem Vektor der anormalen Vektordaten und einem Vektor der normalen Vektordaten für jedes Byte der anormalen Vektordaten berechnet, um eine Ähnlichkeit zwischen den anormalen Vektordaten und den normalen Vektordaten aus der für jedes Byte berechneten Ähnlichkeit zu berechnen.

4. Abschätzungseinrichtung (1) nach Anspruch 1,
wobei in einem Fall, in dem eine höchste Ähnlichkeit unter Ähnlichkeiten zwischen einem Vektor, der einem vorbestimmten Byte der anormalen Paketdaten entspricht, und einem Vektor, der jedem Byte der extrahierten normalen Vektordaten entspricht, niedriger ist als ein vorbestimmter Schwellenwert, die Abschätzungseinheit das vorbestimmte Byte als das anormale Byte abschätzt.

5. Abschätzungsverfahren, das die folgenden Schritte umfasst:
Umwandeln durch einen Computer von anormalen Paketdaten in anormale Vektordaten unter Verwendung eines Modells, das Paketdaten in Vektordaten umwandelt, in denen jedes Byte der Paketdaten in einen Vektor umgewandelt wird, und wobei jedes Byte jedem Vektor zugeordnet wird, wobei jeder Vektor ein Merkmal eines Werts von jedem Byte der Paketdaten darstellt;
Extrahieren durch einen Computer von normalen Vektordaten, die eine relativ hohe Ähnlichkeit mit den anormalen Vektordaten aufweisen, aus einer Vielzahl von Teilen von normalen Vektordaten, die durch Umwandeln einer Vielzahl von Teilen von normalen Paketdaten unter Verwendung des Modells erhalten wurden; und
Abschätzen durch den Computer eines anormalen Bytes in den anormalen Paketdaten aus einer Ähnlichkeit zwischen einem Vektor, der jedem Byte der anormalen Vektordaten entspricht, und einem Vektor, der jedem Byte der extrahierten normalen Vektordaten entspricht, wobei das anormale Byte basierend auf einer Ähnlichkeit zwischen Vektordaten, die einem i-ten Byte der anormalen Paketdaten entsprechen, und Vektordaten, die dem i-ten Byte der normalen Paketdaten entsprechen, die niedriger als ein vorbestimmter Schwellenwert ist, abgeschätzt wird.

6. Programm, um zu bewirken, dass ein Computer als die Abschätzungseinrichtung nach einem der Ansprüche 1 bis 4 fungiert.

7. Abschätzungseinrichtung nach Anspruch 1,
wobei die anormalen Paketdaten das anormale Byte und mindestens ein normales Byte umfassen.

## Revendications

1. Appareil d'estimation (1) comprenant :
une unité de conversion (21) qui convertit des données de paquet anormal en données de vecteur anormal en utilisant un modèle qui convertit des données de paquet en données de vecteur dans lesquelles chaque octet des données de paquet est converti en un vecteur et dans lequel chaque octet est associé à chaque vecteur, chaque vecteur représentant une caractéristique d'une valeur de chaque octet des données de paquet ;
une unité d'extraction (23) qui extrait des données de vecteur normal présentant une similarité relativement élevée par rapport aux données de vecteur anormal parmi une pluralité d'éléments de données de vecteur normal obtenues en convertissant une pluralité d'éléments de données de paquet normal en utilisant le modèle ; et
une unité d'estimation (24) qui estime un octet anormal dans les données de paquet anormal à partir d'une similarité entre un vecteur correspondant à chaque octet des données de vecteur anormal et un vecteur correspondant à chaque octet des données de vecteur normal extrait, dans lequel l'octet anormal est estimé sur la base d'une similarité entre des données de vecteur correspondant à un i-ème octet des données de paquet anormal et des données de vecteur correspondant au i-ème octet des données de paquet normal qui est inférieure à un seuil prédéterminé.

2. Appareil d'estimation (1) selon la revendication 1,
dans lequel le modèle est généré par apprentissage d'une valeur de chaque octet d'une pluralité d'éléments de données de paquet normal.

3. Appareil d'estimation selon la revendication 1,
dans lequel l'unité d'extraction (23) calcule une similarité entre un vecteur des données de vecteur anormal et un vecteur des données de vecteur normal pour chaque octet des données de vecteur anormal afin de calculer une similarité entre les données de vecteur anormal et les données de vecteur normal à partir de la similarité calculée pour chaque octet.

4. Appareil d'estimation (1) selon la revendication 1,
dans lequel dans un cas où une similarité la plus élevée parmi des similarités entre un vecteur correspondant à un octet prédéterminé des données de paquet anormal et un vecteur correspondant à chaque octet des données de vecteur normal extrait est inférieure à un seuil prédéterminé, l'unité d'estimation estime l'octet prédéterminé en tant qu'octet anormal.

5. Procédé d'estimation comprenant les étapes consistant à :
convertir, par un ordinateur, des données de paquet anormal en données de vecteur anormal en utilisant un modèle qui convertit des données de paquet en données de vecteur dans lesquelles chaque octet des données de paquet est converti en un vecteur et dans lequel chaque octet est associé à chaque vecteur, chaque vecteur représentant une caractéristique d'une valeur de chaque octet des données de paquet ;
extraire, par l'ordinateur, des données de vecteur normal présentant une similarité relativement élevée par rapport aux données de vecteur anormal parmi une pluralité d'éléments de données de vecteur normal obtenues en convertissant une pluralité d'éléments de données de paquet normal en utilisant le modèle ; et
estimer, par l'ordinateur, un octet anormal dans les données de paquet anormal à partir d'une similarité entre un vecteur correspondant à chaque octet des données de vecteur anormal et un vecteur correspondant à chaque octet des données de vecteur normal extrait, dans lequel l'octet anormal est estimé sur la base d'une similarité entre des données de vecteur correspondant à un i-ème octet des données de paquet anormal et des données de vecteur correspondant au i-ème octet des données de paquet normal qui est inférieure à un seuil prédéterminé.

6. Programme pour amener un ordinateur à fonctionner en tant qu'appareil d'estimation selon l'une quelconque des revendications 1 à 4.

7. Appareil d'estimation selon la revendication 1,
dans lequel les données de paquet anormal comprennent l'octet anormal et au moins un octet normal.
